# EUROPÄISCHE PATENTSCHRIFT

(11) **EP 2 000 192 B1**
(45) Veröffentlichungstag und Bekanntmachung des Hinweises auf die Patenterteilung: **02.11.2011**
(21) Anmeldenummer: 08005927.2
(22) Anmeldetag: 28.03.2008
(51) Int. Cl.: B01D 33/04, B01D 33/11, B01D 33/41

(54) **Filtervorrichtung zum Filtern von Flüssigkeiten**
Filter device for filtering liquids
Dispositif de filtre destiné au filtrage de liquides

(30) Priorität: 31.05.2007 DE 102007025540
(43) Veröffentlichungstag der Anmeldung: 10.12.2008
(73) Patentinhaber: Eichelmann, Larissa, 14513 Teltow (DE)
(72) Erfinder: Eichelmann, Klaus, 14513 Teltow (DE)
(74) Vertreter: Maser, Jochen

(56) Entgegenhaltungen:
- DE-A1- 3 811 932
- US-A- 4 439 320
- US-A- 4 681 679

## Beschreibung

Die Erfindung betrifft eine Filtervorrichtung zum Filtern von Flüssigkeiten gemäß dem Oberbegriff des Anspruchs 1.

Aus der DE 38 11 932 A1 ist eine gattungsgemäße Filtervorrichtung zum Filtern von Flüssigkeiten bekannt geworden. Solche bekannte Flüssigkeitsfilter werden zum Regenerieren von Flüssigkeiten, insbesondere von Schmier- und/oder Bearbeitungsflüssigkeiten für Werkzeugmaschinen oder sonstige Produktionsmaschinen eingesetzt. Diese Filtervorrichtung weist ein Filtertuch auf, das im Filterbereich mit zumindest einem über Umlenkrollen geführten und angetriebenen Transportband entlang einer Kreisbahn bewegt wird. Dieser Filterbereich ist rinnenförmig ausgebildet, der durch seitliche Scheiben oder durch seitliche Wandungen mit daran drehbar gelagerten Ringen begrenzt ist. In einer Scheibe oder einer seitlichen Wandung ist eine zentrale Öffnung vorgesehen, durch welche eine Zuführleitung zur Einleitung der zu reinigenden Flüssigkeiten in den Filterbereich führt. Solche Filtervorrichtungen haben sich im Einsatz bewährt. Es steigen jedoch die Anforderungen an den Reinheitsgrad sowie an die zu reinigende Flüssigkeitsmenge je Zeiteinheit. Deshalb wurde bislang vorgeschlagen, eine Reinigungsanlage vorzusehen, welche aus einem separaten Filter mit einer Vorfiltrationsstufe, zum Beispiel zur Spänetrennung, und einem separaten Filter mit einer Hauptfiltrationsstufe bestanden. Die beiden Filter waren über separate Pumpen in Reihe zueinander geschalten und mit der Werkzeugmaschine verbunden. Eine solche Reinigungsanlage weist den Nachteil auf, dass der apparative Aufbau sehr hoch ist sowie ein erhöhter Platzbedarf erfordert wird.

Der Erfindung liegt deshalb die Aufgabe zugrunde, eine Filtervorrichtung zu schaffen, welche den steigenden Anforderungen an die zu reinigende Flüssigkeitsmenge je Zeiteinheit gerecht wird, einen geringen Platzbedarf erfordert und im Aufbau kostengünstig ist.

Diese Aufgabe wird erfindungsgemäß durch die Merkmale des Anspruchs 1 gelöst.

Durch die erfindungsgemäße Filtervorrichtung mit zumindest einer Filtereinrichtung, die in oder oberhalb dem rinnenförmigen Filterbereich integriert und als erste oder weitere Filtrationsstufe ausgebildet ist, wird eine kompakte Bauart ermöglicht. Es werden somit zumindest zwei Filtrationsstufen in einer Filtervorrichtung integriert. Gleichzeitig wird der benötigte Platzbedarf reduziert, so dass sich dieser auf die räumliche Ausdehnung der bisherigen zweiten Filtrationsstufe beschränkt, die durch den rinnenförmigen Filterbereich ausgebildet war. Diese Anordnung weist darüber hinaus den Vorteil auf, dass zusätzliche Förderpumpen sowie anlagentechnische Einrichtungen zwischen der ersten und zweiten Filtrationsstufe nicht erforderlich sind. Somit kann durch diese kompakte Bauart eine Grob- und Feinfiltration bzw. eine Vor- und Hauptfiltration durch eine Filtervorrichtung ermöglicht werden.

Nach einer bevorzugten Ausgestaltung der Erfindung ist vorgesehen, dass die in oder oberhalb dem rinnenförmigen Filterbereich der Filtervorrichtung vorgesehene Filtereinrichtung ein rotationssymmetrisches Gehäuse aufweist, welches oberhalb eines Flüssigkeitsniveaus der zu reinigenden Flüssigkeit im rinnenförmigen Filterbereich, die eine zweite oder letzte Filtrationsstufe bildet, vorgesehen ist. Dadurch kann eine räumliche Trennung der ersten und zweiten oder weiteren Filtrationsstufe gegeben sein, obwohl diese in einem Gehäuse der Filtervorrichtung angeordnet sind. Somit kann jede Filtrationsstufe unabhängig voneinander arbeiten.

Die Rotationsgeschwindigkeit der Filtereinrichtung bzw. des Gehäuses der Filtereinrichtung ist vorzugsweise getrennt von der Transportgeschwindigkeit des Transportbandes der zweiten oder letzten Filtrationsstufe in der Filtervorrichtung ansteuerbar. Somit können die erste und zweite oder weitere Filtrationsstufe unabhängig voneinander an die jeweilige Reinheitsgrade der Filtration bzw. deren Filteraufgaben angepasst werden.

Des Weiteren ist bevorzugt vorgesehen, dass die Zuführleitung durch eine zentrale Öffnung in der Scheibe in die erste Filtrationsstufe mündet. Dadurch kann ein vereinfachter Aufbau erzielt werden, wobei auf die Konstruktion der bisher ausgestalteten Filtervorrichtungen mit dem rinnenförmigen Filterbereich zurückgegriffen werden kann. Dadurch kann diese erfindungsgemäße Filtervorrichtung kostengünstig hergestellt werden.

Die Rotationsachse der Filtereinrichtung und des rinnenförmigen Filterbereich liegen bevorzugt in einer gemeinsamen Achse. Dadurch ergibt sich ein konstruktiv einfacher und kompakter Aufbau, der eine zentrale Zuführung der zu reinigenden bzw. zu regenerierenden Flüssigkeit ermöglicht.

Nach einer vorteilhaften Ausgestaltung der Erfindung ist der zentralen Öffnung in der Scheibe oder Wandung, welche die Zuführleitung aufnimmt, gegenüberliegend eine Öffnung in der den Filterbereich begrenzenden Scheibe oder Wandung angeordnet, durch welche eine Abführleitung zum Abtransport der Schmutzfracht aus dem Filterbereich heraus vorgesehen ist. Somit kann die Zuführung der verunreinigten Flüssigkeit und das Abführen der Schmutzfracht in der ersten Filtrationsstufe in einer gemeinsamen Achse liegen. Gleichzeitig kann dadurch eine Lagerung des rotationssymmetrischen Filtergehäuses der Filtereinrichtung parallel zu den Scheiben oder Wandungen, die den rinnenförmigen Filterbereich begrenzen, erfolgen.

Bevorzugt ist das rotationssymmetrische Gehäuse der Filtereinrichtung aus einem Maschengewebe ausgebildet. Die Größe der einzelnen Maschen sind an die jeweilige Filtrationsaufgabe angepasst. Dadurch kann der durch die Filtration erzielbare Reinheitsgrad eingestellt werden.

Nach einer vorteilhaften Ausgestaltung der Erfindung ist vorgesehen, dass oberhalb der Filtereinrichtung eine Absprüheinrichtung vorgesehen ist. Dadurch wird ermöglicht, dass gegebenenfalls sich in den Maschen des Maschengewebes verhakende Schmutzpartikel ausgespült werden. Gleichzeitig kann eine Reinigung des Maschengewebes erfolgen, so dass ein Zusetzen des Maschengewebes verhindert ist.

Das rotationssymmetrische Gehäuse der Filtereinrichtung ist bevorzugt mit der Zu- und Abführleitung verbunden. Dadurch kann der konstruktive Aufbau der Filtervorrichtung, insbesondere die Lagerung des Gehäuses, vereinfacht werden.

Des Weiteren ist bevorzugt vorgesehen, dass in dem rotationssymmetrischen Gehäuse der Filtereinrichtung eine Förderschnecke vorgesehen ist. Dadurch wird erzielt, dass die sich ansammelnde Schmutzfracht innerhalb des rotationssymmetrischen Gehäuses durch die Rotation des Filtergehäuses zur Abführleitung gefördert wird. Über diese Abführleitung wird die Schmutzfracht nach außen geführt, so dass diese in einem Auffangbehälter aufgefangen werden kann.

Nach einer ersten bevorzugten Ausführungsform der Filtereinrichtung ist vorgesehen, dass das Filtergehäuse kegelförmig ausgebildet ist. Dadurch wird ermöglicht, dass aufgrund der Steigung der Mantelfläche zusammen mit der Förderschnecke ein Austragen der Schmutzfracht aus dem Gehäuse unterstützt wird.

Das kegelförmige Gehäuse der Filtereinrichtung weist des Weiteren bevorzugt einen zylindrischen Boden auf, in welchen die Zuführleitung mündet. Die Abführleitung ist bevorzugt am spitzen Ende des kegelförmigen Filtergehäuses vorgesehen. Somit ist das kegelförmige Gehäuse liegend in dem rinnenförmigen Filterbereich der Filtervorrichtung eingebunden.

Nach einer alternativen Ausgestaltung des rotationssymmetrischen Gehäuses der Filtereinrichtung ist vorgesehen, dass dieses trommelförmig ausgebildet ist. Dadurch kann ein erhöhtes Filtrationsvolumen aufgenommen werden.

Das trommelförmige Gehäuse der Filtereinrichtung weist bevorzugt an einem Ende der Förderstrecke eine Schmutzfracht-Aushebevorrichtung auf. Dadurch wird die in Richtung zur Abführöffnung transportierte Schmutzfracht aus dem trommelförmigen Gehäuse herausgehoben und abgefördert.

Die Mantelfläche des rotationssymmetrischen Gehäuses der Filtereinrichtung erstreckt sich bevorzugt zumindest entlang der halben Länge des rinnenförmigen Filterbereichs. In Abhängigkeit des Reinigungsvolumens kann die Länge entsprechend anpassbar sein.

In dem rinnenförmigen Filterbereich wird eine Trennung der ersten Filtrationsstufe zur weiteren Filtrationsstufe bevorzugt dadurch erzielt, dass ein Füllstandssensor das Flüssigkeitsniveau der weiteren oder letzten Filtrationsstufe im rinnenförmigen Filterbereich überwacht, so dass dieses unterhalb eines tiefsten Punkt der ersten oder vorgeschaltenen Filtrationsstufe vorgesehen ist und ein Aufschwimmen der Schutzpartikel in die erste Filterstufe verhindert wird.

Nach einer weiteren bevorzugten Ausgestaltung der Erfindung ist vorgesehen, dass die Filtereinrichtung als Rollsiebfilter ausgebildet ist. Dadurch wird eine konstruktiv einfache Ausgestaltung ermöglicht.

Die erste Filtrationsstufe ist zur Vor- oder Grobfiltration ausgebildet. Vorzugsweise ist ein Reinheitsgrad von 80 bis 200 µm Partikelgröße vorgesehen. Dadurch kann in Abhängigkeit der Auswahl des auf dem Transportband aufliegenden Filtertuches ein Reinheitsgrad der Flüssigkeit von weniger als bspw. 50 µm Partikelgröße ermöglicht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittdarstellung einer erfindungsgemäßen Filtervorrichtung,
Figur 2 eine schematische Seitenansicht der erfindungsgemäßen Filtervorrichtung gemäß Figur 1,
Figur 3 eine schematische Schnittdarstellung einer alternativen Ausführungsform zu Figur 1 und
Figur 4 eine schematische Schnittdarstellung der alternativen Ausführungsform einer Filtereinrichtung gemäß Fig. 3.

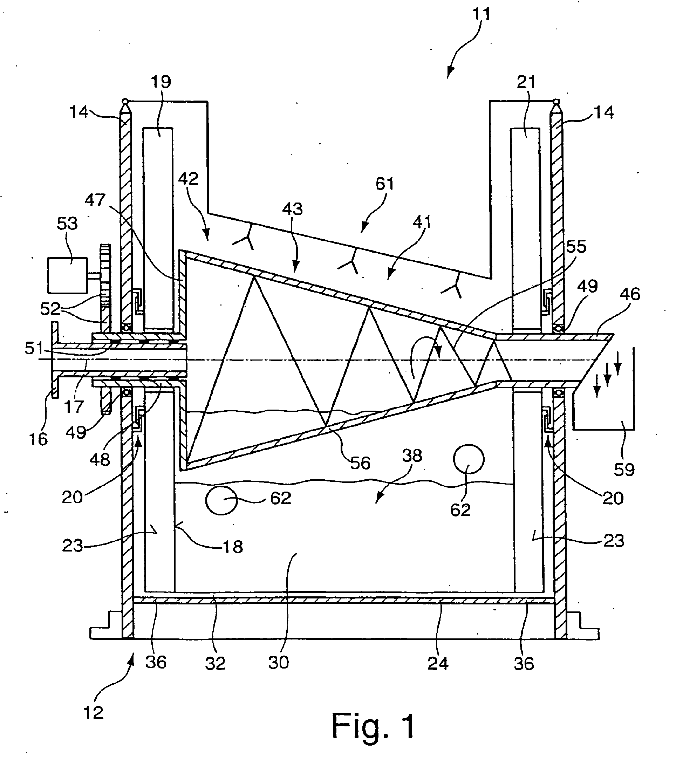

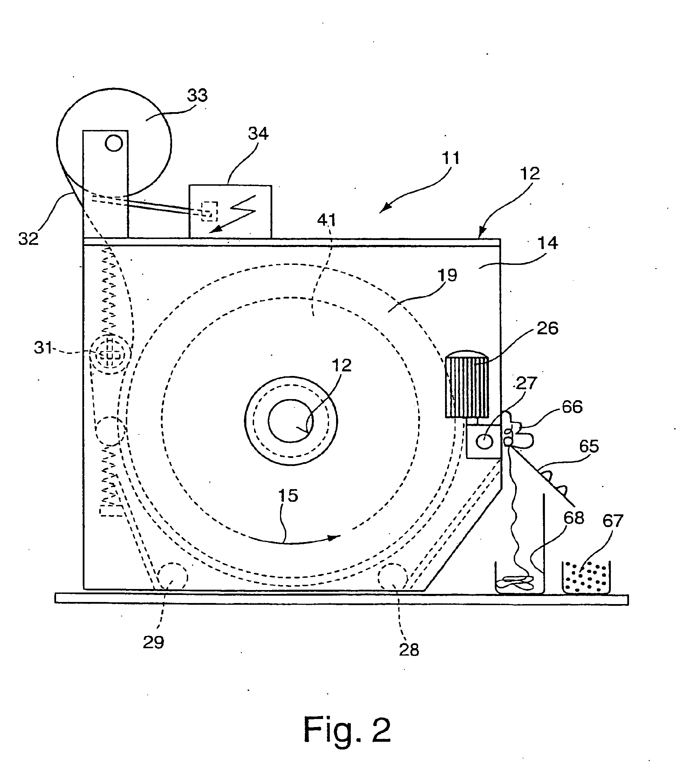

In den Figuren 1 und 2 ist eine erste erfindungsgemäße Ausführungsform einer Filtervorrichtung 11 dargestellt. Die Filtervorrichtung 11 weist ein Gehäuse 12 auf, welches zumindest nach unten hin mediumsdicht ausgebildet ist. An einer Seitenwand 14 ist eine Zuführleitung 16 vorgesehen, durch welche eine zu reinigende bzw. zu regenerierende Flüssigkeit oder ein zu reinigendes bzw. zu regenerierendes Medium der Filtervorrichtung 11 zugeführt wird. Diese Zuführleitung 16 ist in einer Achse 17 vorgesehen, um welche zwei mit einem Außenflansch 18 versehene Scheiben 19, 21 rotieren. Durch eine Lagerung 20, die schematisch dargestellt ist, sind die Scheiben 19, 21 an den Seitenwänden 14 drehbar gelagert. Zwischen diesen Scheiben 19, 21 sind mehrere Schmutzmitnehmerstege vorgesehen, welche die Scheiben 19, 21 im Abstand zueinander positionieren. An äußeren Ringflächen 23 der Scheiben 19, 21 stützt sich ein Transportband 24 ab. Dieses Transportband 24 ist vorteilhafterweise endlos ausgebildet und mit einem Motor 26 angetrieben. Eine Antriebsachse 27 führt das Transportband 24 und ist vorteilhafterweise geringfügig unterhalb einer durch die Achse 17 bestimmten Mittelebene der Filtervorrichtung 11 vorgesehen.

Das Transportband 24 wird in Rotationsrichtung gemäß Pfeil 15 entlang der äußeren Ringfläche 23 geführt. Über Umlenkrollen 28, 29 wird das Transportband 24 zurückgeführt und an einer Spannrolle 31 umgelenkt. Im Bereich diese Spannrolle 31 wird ein Filtertuch 32 einem Filterraum 30 zugeführt. Dieses Filtertuch 32 wird von einer Vorratsrolle 33 abgezogen. Ein Sensor 34 überwacht den Rollendurchmesser des Filtertuches 32, so dass automatisch ein anstehender Rollenwechsel angezeigt wird.

Einem äußeren Randbereich des Transportbandes 24 zugeordnet sind bspw. Dichtbänder 36 vorgesehen, die jeweils an den äußeren Ringflächen 23 der Scheiben 19, 21 anliegen. Im Filterbereich 30 sind die Dichtbänder 36 und das Transportband 24 gleichlaufend entlang einer Kreisbahn geführt. Gleichzeitig wird das Filtertuch 32 über die Dichtbänder 36 zu den äußeren Ringflächen 23 der Scheiben 19, 21 gedrückt. Dadurch findet eine gleichmäßige Bewegung zwischen dem Transportband 24 und den Dichtbändern 36 ohne Relativbewegung zwischen den Dichtbändern 36 und dem Transportband 24 bzw. dem Filtertuch 32 statt.

Durch die vorstehend beschriebene Ausgestaltung des Filterbereichs 30 wird ein rinnenförmiger Filterbereich ausgebildet, der eine Filtrationsstufe 38 bildet. Über eine nicht näher dargestellte Absaugleitung wird die unterhalb bzw. außerhalb des Filtertuches 32 im Gehäuse 12 aufgefangene und gereinigte Flüssigkeit abgesaugt und dem Verwendungsort wieder zugeführt.

Dieser Filtrationsstufe 38 ist zumindest eine erste Filtrationsstufe 41 vorgeschalten, welche durch eine Filtereinrichtung 42 ausgebildet ist und oberhalb des Filterbereiches 30 oder innerhalb der Scheiben 19, 21 angeordnet ist. Die Filtereinrichtung 42 weist ein rotationssymmetrisches Gehäuse 43 auf, welches an einem Ende mit der Zuführleitung 16 in Verbindung steht und am gegenüberliegenden Ende mit einer Abführleitung 46, welche beide bevorzugt koaxial zur Achse 17 angeordnet ist. Das rotationssymmetrische Gehäuse 43 ist gemäß der ersten Ausführungsform kegelförmig ausgebildet. Das Gehäuse 43 weist ein scheibenförmigen Boden 47 auf, an welchem ein Flanschabschnitt 48 vorgesehen ist, der durch ein Lager 49 drehbar zur Seitenwand 14 aufgenommen ist. Zwischen der Scheibe 19 und dem Flanschabschnitt 48 kann eine Gleitführung, eine Drehlagerung oder ein Spalt vorgesehen sein, so dass die Scheibe 19 unabhängig von der Filtereinrichtung 42 drehbar angeordnet ist. Zwischen dem Flanschabschnitt 48 und der Zuführleitung 16 ist des Weiteren ein Lager 51 zur drehbaren Aufnahme der Filtereinrichtung 42 vorgesehen. Zusätzlich können nicht näher dargestellte Dichtringe zwischen dem Flanschabschnitt 48, 46 und der Scheibe 19, 21 und/oder dem Flanschabschnitt 48 und der Zuführleitung 16 vorgesehen sein, damit ein Austreten von zu reinigender oder regenerierender Flüssigkeit aus dem Gehäuse 12 verhindert wird. An einem außerhalb des Gehäuses 12 liegenden Bereiches des Flanschabschnittes 48 ist ein Antriebselement insbesondere ein Zahn- oder Reibrad 52 vorgesehen, welches mit einem Antrieb 53 in Wirkverbindung zum drehbaren Antrieb der Filtereinrichtung 42 steht.

Das Gehäuse 43 der Filtereinrichtung 42 ist im Ausführungsbeispiel gemäß den Figuren 1 und 2 kegelförmig ausgebildet, wobei der Boden 47 des Gehäuses 43 der Zuführleitung 16 zugeordnet ist. Gegenüberliegend geht das verjüngte Gehäuse 43 in die Abführleitung 46 über, welche im äußeren Durchmesser kleiner als der Durchmesser des Bodens 47 ausgebildet ist. In dem Gehäuse 43 ist eine Förderschnecke 55 vorgesehen, die sich wendelförmig zur Abführleitung 46 erstreckt. Diese Förderschnecke 55 liegt an einer Innenseite einer kegelförmig ausgebildeten Mantelfläche 56 des Gehäuses 43 an, welche durch ein Maschengewebe ausgebildet ist. Die über die Zuführleitung 16 in den Innenraum des Gehäuses 43 gelangende Flüssigkeit tritt durch das Maschengewebe der Mantelfläche 56 hindurch, wobei die mitgeführten Schmutzpartikel bzw. Schmutzfracht durch das Maschengewebe zurückgehalten wird. Aufgrund der Rotationsbewegung des Gehäuses 43 wird diese Schmutzfracht über die Förderschnecke 55 zur Abführleitung 46 übergeführt. Die Abführleitung 46 weist an einem außerhalb des Gehäuses 12 der Filtervorrichtung 11 liegenden Abschnitt einen Schräganschnitt 58 auf. Dadurch wird ermöglicht, dass die herausgeförderte Schmutzfracht selbständig in ein sich darunter befindlichen Auffangbehälter oder Sammelbehälter 59 selbständig eingebracht wird.

Die vorstehend beschriebene Filtereinrichtung 42 ist bevorzugt als Rollsiebfilter ausgebildet und ermöglicht eine erste Filtrationsstufe 41 als Vor- oder Grobfilter. In Abhängigkeit der Maschenweite kann der Reinheitsgrad der Filtration ausgewählt und eingestellt werden.

Die Filtereinrichtung 42 ist unabhängig von den Scheiben 19, 21 drehbar gelagert. Deshalb ist die Abführleitung 46 ebenfalls in der Seitenwand 14 durch eine Lagerung 49 gelagert und relativ drehbar über eine Gleitlagerung zur Scheibe 21 angeordnet.

Oberhalb der Filtereinrichtung 42 ist eine Absprühvorrichtung 61 angeordnet. Dadurch kann das Maschengewebe der Mantelfläche 56 gereinigt werden, so dass ggf. darin anhaftende Schmutzpartikel herausgelöst werden, um ein Zusetzen des Maschengewebes zu verhindern und optimale Reinigungsergebnisse zu erzielen.

Unterhalb der Filtereinrichtung 42 ist der rinnenförmige Filterbereich 30 ausgebildet, der die weitere oder letzte Filtrationsstufe 38 der Filtervorrichtung 11 bildet. In diesem Filterbereich 30 sind bevorzugt zwei Füllstandssensoren 62 vorgesehen. Einer der beiden Füllstandssensoren 62 sorgt dafür, dass der Flüssigkeitspegel innerhalb dem Filterbereich 30 nicht zu gering wird und der andere Füllstandssensor 62 überwacht einen zu stark ansteigenden Füllstandspegel, so dass das Flüssigkeitsniveau immer unterhalb der Filtereinrichtung 42 liegt. Gleichzeitig wird durch die Füllstandssensoren 62 die Drehbewegung der Scheiben 19, 21 und die Förderbewegung des Transportbandes 24 angesteuert. Auf dem Transportband 24 lagert sich die Schmutzfracht der Flüssigkeit in der zweiten oder weiteren Filtrationsstufe 38 ab und bildet eine sogenannten Filterkuchen. Über die Schmutzmitnehmerstege wird der Filterkuchen aus dem Filterbereich 30 herausgeführt, wobei zwischen dem Transportband 24, dem Filtertuch 32 und den Schmutzmitnehmerstegen in der bevorzugten Ausführungsform keine Relativbewegung stattfindet. Über einen nicht näher dargestellten Abstreifer werden die Schmutzmitnehmerstege nach dem Herausführen des Filterkuchens aus dem Filterbereich 30 gereinigt. Der Filterkuchen wird über eine Rutsche 65 abgeworfen. Des Weiteren ist vorteilhafterweise ein Rakel 66 vorgesehen, mit welchem Schmutzanhäufungen vom Filtertuch 32 abgehoben und in einen gesonderten Schmutzsammelbehälter 67 abgeleitet werden. Das Filtertuch 32, welches vorzugsweise recyclebar ist, wird von einem Sammelbehälter 68 aufgenommen.

Alternativ zur vorbeschriebenen Ausführungsform von Scheiben 19, 21 können als seitliche Begrenzungen eines Filterbereiches 30 auch Wandungen vorgesehen sein, an denen drehbar gelagerte Ringe befestigt sind. Diese Ringe weisen wiederum äußere Ringflächen 23 auf, in denen die Dichtbänder 36 und das Transportband 24 anliegen.

Des Weiteren kann alternativ vorgesehen sein, dass die Scheiben 19, 21 als seitliche Begrenzungen vorgesehen sind, die nicht mit Schmutzmitnehmerstegen verbunden sind. Diese Scheiben 19, 21 sind auf einer drehbaren Achse gelagert, die zwischen den Scheiben 19, 21 rotierende Paddel oder Aufklemmplatten drehbar aufnimmt.

Eine weitere nicht näher dargestellte alternative Ausführungsform der Filtereinrichtung 42 kann darin bestehen, dass koaxial zum Gehäuse 43 ein weiteres Gehäuse vorgesehen ist, welche eine Mantelfläche mit einer engeren Maschenweite als das innenliegende Gehäuse aufweist. Dadurch kann eine der ersten Filtrationsstufe nachgeschalteten zweite Filtrationsstufe vorgesehen sein, welche beide oberhalb der weiteren oder letzten Filtrationsstufe 38 angeordnet sind. Diese beiden Gehäuse können gleichlaufend oder auch relativ zueinander drehbar angeordnet sein. Die Anzahl der ineinandergeschachtelten Gehäuse ist nicht auf zwei begrenzt, sondern kann in Abhängigkeit des zur Verfügung stehenden Bauraum auch mehrere Stufen umfassen. Dadurch kann eine mehrstufige Filtration stattfinden, wobei die zu reinigende Flüssigkeit über eine gemeinsame Zuführleitung zugeführt und die zu reinigende Flüssigkeit nacheinander die einzelnen Filtrationsstufen durchläuft.

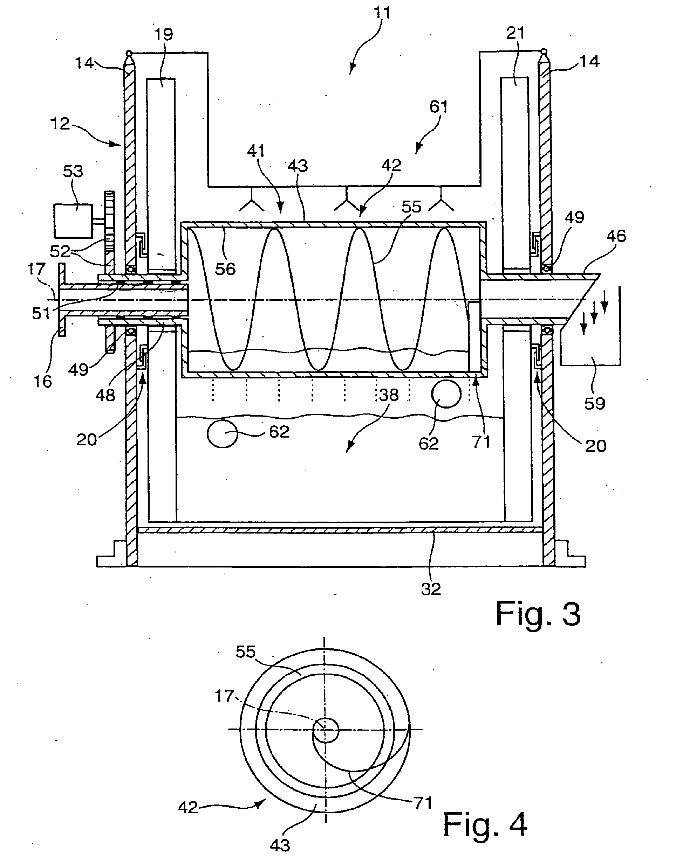

In Figur 3 ist eine alternative Ausführungsform der Filtereinrichtung 42 zu den Figuren 1 und 2 dargestellt. Der Aufbau der Filtervorrichtung 11 sowie die Ausgestaltung der Filtrationsstufe 38 entspricht den Figuren 1 und 2. Nachfolgend werden lediglich die Abweichungen der Filtereinrichtung 42 im Vergleich zu den Figuren 1 und 2 beschrieben.

Das Gehäuse 43 ist trommelförmig ausgebildet. An einem der Abführleitung 46 zugewandten Ende der Förderschnecke 55 ist eine Schmutzfracht-Aushebervorrichtung 71 vorgesehen, um die an der Innenseite der Mantelfläche 46 aufliegende Schmutzfracht in die Abführleitung 46 überzuführen, die in dem Sammelbehälter 59 aufgefangen wird. Hierfür kann bspw. eine rinnen- oder schalenförmige Spirale vorgesehen sein, welche die Schmutzfracht-Aushebevorrichtung 71 bildet, wie diese in einer Seitenansicht in Figur 4 dargestellt ist. Diese rinnen- oder schalenförmige Spirale kann fest in dem trommelförmigen Gehäuse 43 vorgesehen sein oder als separat rotierendes Teil ausgebildet werden, so dass unabhängig der Rotation des Gehäuses 43 ein erhöhter Abtransport der Schmutzfracht ermöglicht wird. Im Übrigen gelten die Ausführungen zu den Figuren 1 und 2.

Alle vorgenannten Ausführungsformen sind jeweils für sich erfindungswesentlich und können beliebig miteinander kombinierbar sein.

## Patentansprüche

1. Filtervorrichtung zum Filtern von Flüssigkeiten mit einem Filtertuch (32) das im Filterbereich (30) mit zumindest einem über Umlenkrollen (28, 29) geführten und getriebenen Transportband (24) entlang einer Kreisbahn bewegt wird, wodurch ein rinnenförmiger Filterbereich (30) gebildet ist, der durch seitliche Scheiben (19, 21) oder durch seitliche Wandungen mit daran drehbar gelagerten Ringen begrenzt ist und mit einer Zuführleitung (16), welche in einer Öffnung einer Scheibe (19, 21) oder einer seitlichen Wandung vorgesehen ist, die zur Einleitung der zu reinigenden Flüssigkeit in den Filterbereich (30) führt, **dadurch gekennzeichnet, dass** in oder oberhalb dem rinnenförmigen Filterbereich (30) zumindest eine Filtereinrichtung (42) vorgesehen ist, die eine erste oder weitere Filtrationsstufe (41) bildet, welche der durch den rinnenförmigen Filterbereich (30) gebildeten Filtrationsstufe (38) vorgeschalten ist.

2. Filtervorrichtung nach Anspruch 1, **dadurch gekennzeichnet, dass** die Filtereinrichtung (42) ein rotationssymmetrisches Gehäuse (43) aufweist, welches oberhalb eines Flüssigkeitsniveaus der zu reinigenden Flüssigkeit in der zweiten Filtrationsstufe (38) vorgesehen ist.

3. Filtervorrichtung nach Anspruch 1 oder 2, **dadurch gekennzeichnet, dass** eine Rotationsgeschwindigkeit der Filtereinrichtung (42) getrennt von der Transportgeschwindigkeit des Transportbandes (24) der weiteren Filtrationsstufe (41) ansteuerbar ist.

4. Filtervorrichtung nach einem der vorhergehenden Ansprüche, **dadurch gekennzeichnet, dass** die Zuführleitung (16) in die Filtereinrichtung (42) mündet.

5. Filtervorrichtung nach einem der vorhergehenden Ansprüche, **dadurch gekennzeichnet, dass** eine Rotationsachse der Filtereinrichtung (42) und des rinnenförmigen Filterbereichs (30) in einer gemeinsamen Achse (17) liegen.

6. Filtervorrichtung nach einem der vorhergehenden Ansprüche, **dadurch gekennzeichnet, dass** der zentralen Öffnung in der Scheibe (19) oder der Wandung, welche die Zuführleitung (16) aufnimmt, gegenüberliegend eine Öffnung in einer den Filterbereich (30) begrenzenden Scheibe (21) oder Wandung vorgesehen ist, durch welche eine Abführleitung (46) zum Abtransport der Schmutzfracht der ersten Filtrationsstufe (41) oder weiteren Filtrationsstufen führt.

7. Filtervorrichtung nach einem der vorhergehenden Ansprüche, **dadurch gekennzeichnet, dass** eine Mantelfläche (56) des Gehäuses (43) der Filtereinrichtung (42) aus einem Maschengewebe ausgebildet ist.

8. Filtervorrichtung nach einem der vorhergehenden Ansprüche, **dadurch gekennzeichnet, dass** oberhalb der Filtereinrichtung (42) eine Absprühvorrichtung (61) vorgesehen ist.

9. Filtervorrichtung nach einem der vorhergehenden Ansprüche, **dadurch gekennzeichnet, dass** das rotationssymmetrische Gehäuse (43) der Filtereinrichtung (42) mit der Abführleitung (46) verbunden ist.

10. Filtervorrichtung nach einem der vorhergehenden Ansprüche, **dadurch gekennzeichnet, dass** in dem Gehäuse (43) der Filtereinrichtung (42) eine Förderschnecke (55) vorgesehen ist.

11. Filtervorrichtung nach einem der vorhergehenden Ansprüche, **dadurch gekennzeichnet, dass** das Gehäuse (43) der Filtereinrichtung (42) kegelförmig ausgebildet ist.

12. Filtervorrichtung nach Anspruch 11, **dadurch gekennzeichnet, dass** die Zuführleitung (16) insbesondere senkrecht in den Boden (47) des kegelförmigen Gehäuses (43) mündet und die Abführleitung (46) am spitzen Ende des kegelförmigen Gehäuses (43) vorgesehen ist.

13. Filtervorrichtung nach einem der Ansprüche 1 bis 10, **dadurch gekennzeichnet, dass** das Gehäuse (43) der Filtereinrichtung (42) trommelförmig ausgebildet ist.

14. Filtervorrichtung nach Anspruch 13, **dadurch gekennzeichnet, dass** an einem Ende einer Förderstrecke der Förderschnecke (55) im trommelförmigen Gehäuse (43) eine Schmutzfracht-Aushebevorrichtung (71) vorgesehen ist.

15. Filtervorrichtung nach einem der vorhergehenden Ansprüche, **dadurch gekennzeichnet, dass** sich die Mantelfläche (56) des Gehäuses (43) der Filtereinrichtung (42) zumindest entlang der halben Breite des Filterbereiches (30) erstreckt.

16. Filtervorrichtung nach einem der vorherigen Ansprüche, **dadurch gekennzeichnet, dass** ein tiefster Punkt der ersten Filtrationsstufe (41) oberhalb eines Flüssigkeitsniveau einer weiteren Filtrationsstufe (38) vorgesehen ist und dieses Flüssigkeitsniveau von einem Füllstandssensor (62) überwacht ist.

17. Filtervorrichtung nach einem der vorhergehenden Ansprüche, **dadurch gekennzeichnet, dass** die Filtereinrichtung (42) als Rollsiebfilter ausgebildet ist.

18. Filtervorrichtung nach einem der vorhergehenden Ansprüche, **dadurch gekennzeichnet, dass** die erste Filtrationsstufe (41) als Vor- oder Grobfilterstufe ausgebildet ist und vorzugsweise einen Reinheitsgrad von 80 bis 200 µm Partikelgröße aufweist.

## Claims

1. A filter apparatus for filtering liquids, said filter apparatus having a filtering cloth (32) which is moved along a circular path in the filtering area by means of at least one transport belt (24) guided and driven via deflection rollers (28, 29) whereby a channel-like filtering area (30) is formed that is delimited by lateral discs (19, 21) or by lateral walls provided with rings rotatably mounted thereon, and having a supply duct (16) which is provided in an opening of a disc (19, 21) or in a lateral wall and which leads to the filtering area (30) and serves for introducing liquid to be cleaned to the filtering area (30), **characterised in that** within, or above, the channel-shaped filtering area (30) at least one filter device (42) is provided which forms a first or a further filtration stage (41) that is disposed upstream of the filtration stage (38) formed by the channel-shaped filtering area (30).

2. The filter apparatus as claimed in claim 1, **characterised in that** the filter device (42) has a rotationally symmetrical housing (43) which is provided in the second filtration stage (38) above a liquid level of the liquid to be cleaned.

3. The filter apparatus as claimed in claim 1 or 2, **characterised in that** a rotational speed of the filter device (42) may be controlled independently of the transport speed of the transport belt (24) of the further filtration stage (41).

4. The filter apparatus as claimed in any one of the preceding claims, **characterised in that** the supply duct (16) leads to the filter device (42).

5. The filter apparatus as claimed in any one of the preceding claims, **characterised in that** the axes of rotation of the filter device (42) and of the channel-shaped filtering area (30) lie on a common axis (17).

6. The filter apparatus as claimed in any one of the preceding claims, **characterised in that** opposite to the central opening formed in the disc (19) or wall which accommodates the supply duct (16), an opening is provided in a disc (21) or wall delimiting the filtering area (30) which accommodates a discharge duct (46) for removal of the impurity load of the first filtration stage (41) or the further filtration stages.

7. The filter apparatus as claimed in any one of the preceding claims, **characterised in that** a lateral area (56) of the housing (43) of the filter device (42) is formed of a mesh fabric.

8. The filter apparatus as claimed in any one of the preceding claims, **characterised in that** a spraying device (61) is provided above the filter device (42).

9. The filter apparatus as claimed in any one of the preceding claims, **characterised in that** the rotationally symmetrical housing (43) of the filter device (42) is connected with the discharge duct (46).

10. The filter apparatus as claimed in any one of the preceding claims, **characterised in that** a conveying screw (55) is provided in the housing (43) of the filter device (42).

11. The filter apparatus as claimed in any one of the preceding claims, **characterised in that** the housing (43) of the filter device (42) is conically shaped.

12. The filter apparatus as claimed in claim 11, **characterised in that** the supply duct (16) leads in particular perpendicularly into the bottom (47) of the conical housing (43) and that the discharge duct (46) is provided on the pointed end of the conical housing (43).

13. The filter apparatus as claimed in any one of claims 1 to 10, **characterised in that** the housing (43) of the filter device (42) is drum-shaped.

14. The filter apparatus as claimed in claim 13, **characterised in that** on one end of a conveying path of the conveying screw (55) an impurity load extraction device (71) is provided in the drum-shaped housing (43).

15. The filter apparatus as claimed in any one of the preceding claims, **characterised in that** the lateral area (56) of the housing (43) of the filter device (42) extends at least over half of the width of the filtering area (30).

16. The filter apparatus as claimed in any one of the preceding claims, **characterised in that** a lowest point of the first filtration stage (41) is provided above a liquid level of a further filtration stage (38) and **in that** said liquid level is monitored by a liquid level sensor (62).

17. The filter apparatus as claimed in any one of the preceding claims, **characterised in that** the filter device (42) is realised as a roll screen filter.

18. The filter apparatus as claimed in any one of the preceding claims, **characterised in that** the first filtration stage (41) is realised as a prefiltering stage or coarse filtering stage and preferably has a degree of purity with a particle size ranging from 80 to 200 µm.

## Revendications

1. Dispositif de filtrage permettant de filtrer des liquides, avec un tissu filtrant (32) qui est déplacé dans une zone de filtrage (30) au moyen d'au moins une bande transporteuse (24) guidée et entraînée par des rouleaux de renvoi (28, 29) le long d'une trajectoire circulaire de sorte à former une zone de filtrage (30) en forme de gorge qui est délimitée par des disques latéraux (19, 21) ou des parois latérales où sont montés des anneaux de manière à pouvoir tourner, et avec un conduit d'amenée (16) qui est prévu dans une ouverture d'un disque (19, 21) ou d'une paroi latérale et qui permet l'introduction du liquide à épurer dans la zone de filtrage (30), **caractérisé en ce que** dans ou au-dessus de la zone de filtrage (30) en forme de gorge est prévu un appareil de filtrage (42) qui forme une première étape de filtration ou une étape de filtration ultérieure (41)., laquelle est placée en amont de l'étape de filtration (38) formée par la zone de filtrage (30) en forme de gorge.

2. Dispositif de filtrage selon la revendication 1, **caractérisé en ce que** l'appareil de filtrage (42) présente un logement (43) à symétrie de rotation, lequel est prévu dans la deuxième étape de filtration (38), au-dessus d'un niveau de liquide du liquide à épurer.

3. Dispositif de filtrage selon la revendication 1 ou 2, **caractérisé en ce qu'**il est possible d'activer une vitesse de rotation de l'appareil de filtrage (42) indépendamment de la vitesse de transport de la bande transporteuse (24) de l'étape de filtration ultérieure (41).

4. Dispositif de filtrage selon l'une des revendications précédentes, **caractérisé en ce que** le conduit d'amenée (16) débouche dans l'appareil de filtrage (42).

5. Dispositif de filtrage selon l'une des revendications précédentes, **caractérisé en ce que** les axes de rotation de l'appareil de filtrage (42) et de la zone de filtrage (30) en forme de gorge se trouvent sur un axe commun (17).

6. Dispositif de filtrage selon l'une des revendications précédentes, **caractérisé en ce qu'**à l'opposé de l'ouverture centrale ménagée dans le disque (19) ou la paroi qui reçoit le conduit d'amenée (16) est prévue une ouverture ménagée dans un disque (21) ou une paroi délimitant la zone de filtrage (30) à travers laquelle passe un conduit d'évacuation (46) permettant d'évacuer les impuretés de la première étape de filtration (41) ou des étapes de filtration ultérieures.

7. Dispositif de filtrage selon l'une des revendications précédentes, **caractérisé en ce que** la surface latérale (56) du logement (43) de l'appareil de filtrage (42) est réalisée en un tissu maillé.

8. Dispositif de filtrage selon l'une des revendications précédentes, **caractérisé en ce qu'**un dispositif de vaporisation (61) est prévu au-dessus de l'appareil de filtrage (42).

9. Dispositif de filtrage selon l'une des revendications précédentes, **caractérisé en ce que** le logement (43) à symétrie de rotation de l'appareil de filtrage (42) est relié au conduit d'évacuation (46).

10. Dispositif de filtrage selon l'une des revendications précédentes, **caractérisé en ce qu'**une vis transporteuse (55) est prévue dans le logement (43) de l'appareil de filtrage (42).

11. Dispositif de filtrage selon l'une des revendications précédentes, **caractérisé en ce que** le logement (43) de l'appareil de filtrage (42) est réalisé en forme de cône.

12. Dispositif de filtrage selon la revendication 11, **caractérisé en ce que** le conduit d'amenée (16) débouche notamment perpendiculairement dans le fond (47) du logement conique (43), et **en ce que** le conduit d'évacuation (46) est prévu à l'extrémité effilée du logement conique (43).

13. Dispositif de filtrage selon l'une des revendications de 1 à 10, **caractérisé en ce que** le logement (43) de l'appareil de filtrage (42) est réalisé en forme tambour.

14. Dispositif de filtrage selon la revendication 13, **caractérisé en ce qu'**un dispositif d'enlèvement des impuretés (71) est prévu à une extrémité de la voie de transport de la vis transporteuse (55), dans le logement (43) en forme de tambour.

15. Dispositif de filtrage selon l'une des revendications précédentes, **caractérisé en ce que** la surface latérale (56) du logement (43) de l'appareil de filtrage (42) s'étend au moins sur la moitié de la largeur de la zone de filtrage (30).

16. Dispositif de filtrage selon l'une des revendications précédentes, **caractérisé en ce qu'**il est prévu qu'un point de niveau minimum de la première étape de filtration (41) se situe au-dessus d'un niveau de liquide d'une étape de filtration ultérieure (38), et **en ce que** ledit niveau de liquide est surveillé par un détecteur de niveau (62).

17. Dispositif de filtrage selon l'une des revendications précédentes, **caractérisé en ce que** l'appareil de filtrage (42) est réalisé en tant que filtre à tamis à déroulement automatique.

18. Dispositif de filtrage selon l'une des revendications précédentes, **caractérisé en ce que** la première étape de filtration (41) est réalisé en tant qu'étape de préfiltration ou de filtration grossière et présente de préférence un degré de pureté avec une taille de particule comprise entre 80 et 200 µm.
